# EUROPEAN PATENT SPECIFICATION

(11) **EP 2 964 442 B1**
(45) Date of publication and mention of the grant of the patent: **10.05.2017**
(21) Application number: 14717192.0
(22) Date of filing: 04.03.2014
(51) Int. Cl.: B29C 44/30, B29C 44/32, B29C 44/46, B29K 75/00, B29L 9/00

(54) **METHOD AND APPARATUS FOR SIMULTANEOUS AND CONTINUOUS FOAMING OF TWO OR MORE PANELS**
VERFAHREN UND VORRICHTUNG ZUM GLEICHZEITIGEN UND KONTINUIERLICHEN AUFSCHÄUMEN VON ZWEI ODER MEHR PLATTEN
PROCÉDÉ ET APPAREIL POUR LE MOUSSAGE SIMULTANÉ ET CONTINU DE DEUX OU PLUS DE DEUX PANNEAUX

(30) Priority: 04.03.2013 IT MI20130316
(43) Date of publication of application: 13.01.2016
(73) Proprietor: Afros S.p.A., 20121 Milano (IT)
(72) Inventor: VOLPATO, Marco, I-21042 Caronno Pertusella (IT); CORTI, Maurizio, I-21042 Caronno Pertusella (IT)
(74) Representative: Candito, Rocco
(86) International application number: PCT/IB2014/059421
(87) International publication number: WO 2014/136046

(56) References cited:
- DE-A1- 2 945 856
- DE-A1- 3 616 100
- GB-A- 1 136 046
- US-A- 5 338 765
- US-A- 5 375 988
- US-A1- 2012 261 852

## Description

### BACKGROUND OF THE INVENTION

The present invention relates to a method and apparatus for simultaneous and continuous foaming of two or more panels, each panel being of the type comprising a pair of external layers of web material between which an intermediate layer is interposed made of insulating expanding polyurethane or phenolic material. In particular, such panels are used in numerous fields of application, for example for making thermal insulation both in civil and industrial building, for devising exterior insulation finishing systems, for making heat-insulating roofs or covers, for building internal dividing walls inside buildings, for cladding attics, for manufacturing refrigerating cells, insulated doors, refrigerator benches and other applications.

### PRIOR ART

Apparatuses are known for the continuous production of expanded polyurethane panels. A known apparatus for producing a single continuous panel comprises a lower horizontal conveyor and an upper horizontal conveyor, that are mutually spaced to bound a foaming area that extends horizontally along a horizontal advance direction and has width and thickness dimensions corresponding to those of the panel to be obtained. The upper and lower conveyors each comprise a web element that can be continuous or consist of adjacent conveying tiles and meshes wound around a respective pair of driving rollers placed at the ends, rotating around respective horizontal axes. The upper and lower conveying web elements contrast and maintain in position the respective layers of web of laminated materials that form the external surfaces of the panels, thus, in the foaming area, define respectively an upper and lower surface mutually facing that lie on respective horizontal planes.

A first continuous web material, for example of paper, plastics or metal, which is intended to define an external face or layer of the panel, is unwound from a respective reel in a continuous manner and rested on the upper surface of the lower conveyor belt and moved together with the latter along the advancing direction. Similarly, a second continuous web material, for example of paper, plastics or metal, intended to define the other external face or layer of the panel, is unwound from a further reel in a continuous manner and rested on the lower surface of the upper conveyor belt, is moved together with the latter along the advancement direction. A dispensing distributor is provided that dispenses onto the first web material a layer of polyurethane or phenolic mixture that progressively expands freely until the resulting polyurethane or phenolic foam comes into contact and adheres to the second upper web material that moves parallel to and at the same speed as the underlying and distanced first web material. A single continuous semifinished product is thus obtained progressively that lies on a horizontal plane. In other words, the single semifinished product that is obtained has prevalent width and length dimensions according to a horizontal plane.

The expanding polyurethane or phenolic mixture is contained laterally by folding upwards the two opposite edges of the first continuous web material made of paper or plastics or another flexible material; the aforesaid two opposite edges are held in an upwardly folded position by lateral pad or strip elements fixed to the tiles. Alternatively, and in particular in the case of the production of panels with sheet metal surfaces, lateral containing is obtained by plastic webs unwound from lateral reels and held in shape by side belts or chains that support interchangeable shapes of plastics that act as web containing and shaping units.

The polyurethane or phenolic foam is left to polymerise and adhere to the upper and lower web material and subsequently the continuous semifinished product obtained is cut to obtain one at a time the single distinct panels having a required length. The single panels that are thus obtained are, one at a time, picked up, rotated so as to take on a vertical lying position and are arranged on a suitable rack support, in a position alongside one another, but spaced to enable cooling and complete shape stabilisation. Cutting the semifinished product to obtain one single panel at a time, removing the single panels one at a time, rotating each of the panels from the horizontal lying position to a vertical lying position and the subsequent positioning thereof parallel to and alongside one another along vertical planes entail movement operations that are very complex, laborious and costly in terms of time. This entails a general slowing of the entire production cycle, with clear economic drawbacks.

GB1136046 relates to a method of simultaneously making two separate laminates having a foamed plastics core sandwiched between and bonded to two outer facing materials.

From GB 1243136 another apparatus is known for the production of a single continuous panel, comprising a pair of conveyor belts that lie on respective vertical planes, advance in a horizontal direction and are spaced apart from one another to bound a foaming area having thickness and width dimensions corresponding to the panel to be made. Similarly to what has been disclosed above, also GB 1243136 provides for two webs of continuous materials being wound, for example webs of paper or plastics that are intended to define the two external and opposite faces of the panel. The two web materials are brought to rest each on a respective conveyor belt, and are made to advance at the same speed in the advancement direction. A dispenser is provided that dispenses a jet of polyurethane or phenolic mixture that progressively expands freely, adhering to the two lateral web materials. A single continuous semifinished product is thus progressively obtained that lies on a vertical plane. The polyurethane or phenolic foam is left to polymerise and adhere to the lateral web materials and, subsequently, the continuous semifinished product obtained is cut to the required length to obtain the single panels one at a time. The single panels that are thus obtained are removed one by one and placed alongside one another on a rack support to enable cooling and complete shape stabilisation. A similar device is also disclosed in DE3616100.

Also with these systems, difficulties and diseconomies remain due to the fact that the operations of dispensing the polyurethane or phenolic resins, forming and cutting the only semifinished product to obtain one single panel at a time, removing one single panel at a time and the subsequent positioning next to other panels on the rack support to enable cooling require rather large overall dimensions and rather high implementation times, occupying significant space and unfavourably slowing down the entire production cycle; all this translates into limited productivity.

### OBJECTS OF THE INVENTION

The object of the present invention is to improve methods and apparatuses for continuous production of panels, in particular for foaming panels of composite type, i.e. comprising pairs of external layers of web material between which intermediate layers are interposed that are made of expanded polyurethane or phenolic material.

In particular, one object of the invention is to provide a method and apparatus that enable the continuous production of panels to be made more productive by speeding up and simplifying the continuous production of panels that in particular enable the dispensing, formation and treatment of the panels at the end of the foaming operation to be facilitated.

### SHORT DESCRIPTION OF THE INVENTION

The above is achievable by a method, and respective apparatus, for simultaneous and continuous foaming of two or more panels as defined in claim 1 and in claim 14 respectively.

Subsequently, for the sake of simplicity, the term "foaming station" shall be taken to mean both the inlet zone into which the liquid polyurethane or phenolic mixture is poured and the subsequent foam conveying and forming zone.

In particular, according to the present invention a method for simultaneous and continuous foaming of two or more panels is provided, according to claim 1.

In one embodiment of the method according to the invention, during the dispensing step ii) the expansion motion of the foam is balanced in a vertical direction upwards and downwards by making the expandable resin flow along an element with a tilted ramp.

In particular, the method, in addition to lower containing of the expanding polyurethane or phenolic mixture, as provided in the preceding step ii), also provides upper containing of the expanding polyurethane or phenolic mixture by the shaped supports of the intermediate guiding and support surfaces and the interposition of separating paper or separating plastics web.

According to the invention an apparatus is provided for simultaneous and continuous foaming of two or more panels, according to claim 14.

In one embodiment, the apparatus comprises a plurality of tilted ramps interposed between the pairs of continuous web material along which the polyurethane or phenolic material that are already in a creamy state flows. The aforesaid ramps have the function of wetting with the polyurethane or phenolic mixture the vertical side surfaces before expansion and promoting, by virtue of the conveying motion made on the sides of the ramps by the surfaces of the interposed belts that slide there, sliding of the expanding foam that is symmetrical downwards and upwards in relation to the pairs of continuous web. In particular, the ramp, or the ramps, can extend from a height that is such as to affect the entire height of the side surfaces. This ensures that the vertical side guiding surfaces are wet by the polyurethane or phenolic mixture for improving the quality of the surfaces of the panels obtained. Other features and advantages will be clear from the appended claims and the description.

Owing to the invention, the aforesaid drawbacks are overcome.

### SHORT DESCRIPTION OF THE DRAWINGS

The invention can be better understood and implemented with reference to the attached drawings, which illustrate some embodiments thereof by way of non-limiting example, in which:
Figure 1 is a schematic view of a first apparatus embodiment according to the invention, comprising a dividing wall element placed in an intermediate position between two conveying devices;
Figure 2 is a cross section that shows schematically the apparatus in Figure 1 with a pair of continuous panels that are obtained thereby simultaneously, one next to the other and are arranged according to respective vertical planes;
Figure 3 is a schematic view of a second apparatus not according to the invention that is devoid of the dividing wall element;
Figure 4 is a cross section that shows schematically the apparatus of Figure 3 with two continuous panels obtained therefrom that are of the type comprising layers of corrugated layers made of sheet metal, or of other materials;
Figure 5 is a fragmented top view of a third apparatus embodiment, which comprises two mutually spaced dividing wall elements, to obtain three distinct continuous panels;
Figure 5A is a cross section of the apparatus in Figure 5 wherein the two dividing walls and the three distinct panels are visible, lying vertically and mutually parallel alongside one another;
Figure 6 is a schematic cross section of a fourth apparatus embodiment according to the invention that comprises a dividing wall element and enables two panels of different type to be obtained, in particular a panel with flat surfaces or external layers, and a panel with a corrugated layer of sheet metal or another material;
Figure 7 is a schematic cross section of a fifth apparatus embodiment according to the invention that comprises a dividing wall element and enables two panels to be obtained simultaneously continuously that are provided with respective layers of a corrugated sheet metal or another material, these latter layers are arranged on opposite sides and facing the respective conveying devices;
Figure 8 is a schematic cross section of a sixth apparatus embodiment according to the invention that comprises seven intermediate dividers configured for separating layers of mutually adjacent and facing corrugated material of respective panels;

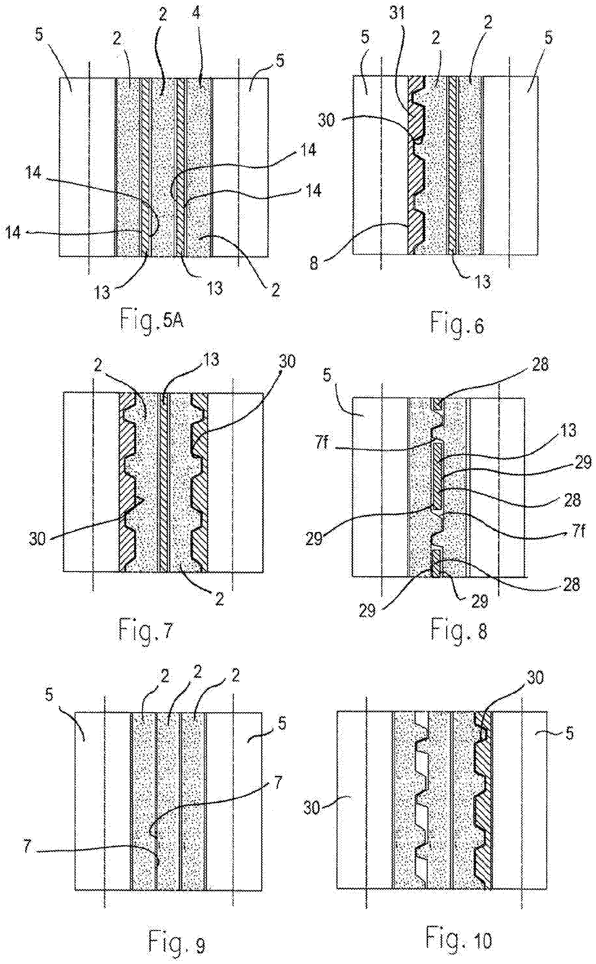

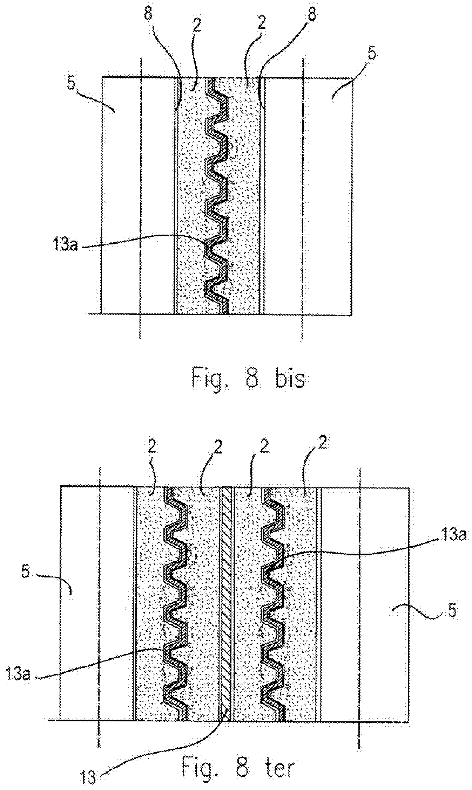

Figure 8bis shows one embodiment of the apparatus provided with one slidable corrugated dividing wall for obtaining two corrugated panels;
Figure 8ter shows one embodiment of the apparatus provided with two slidable corrugated dividing walls and with one flat dividing part for simultaneously obtaining four corrugated panels;
Figure 9 shows a seventh apparatus not according to the invention, for simultaneously obtaining three distinct panels;
Figure 10 shows an eighth apparatus not according to the invention, for simultaneously obtaining three distinct panels each comprising a layer of corrugated sheet metal or other material;

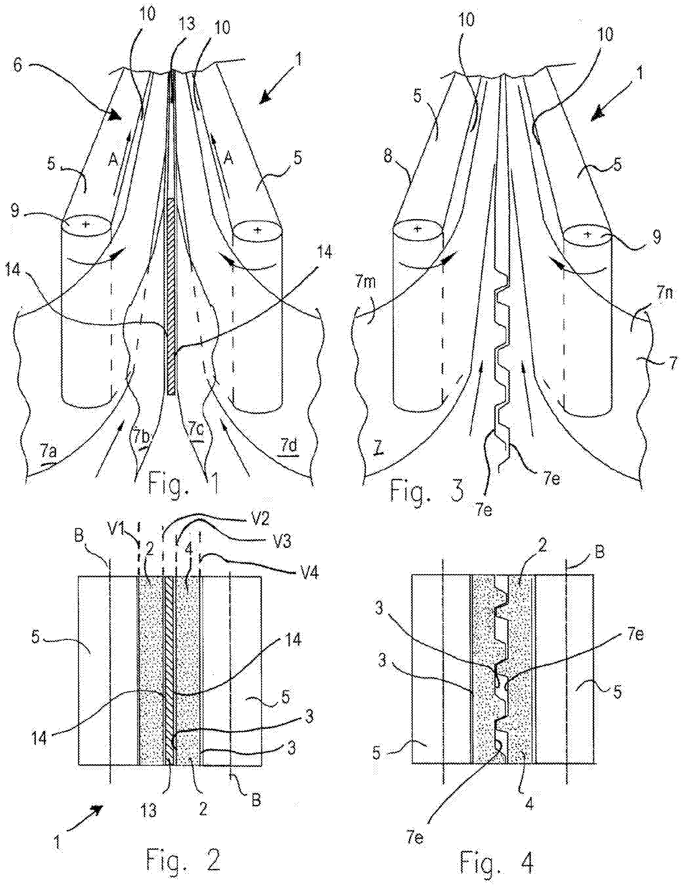

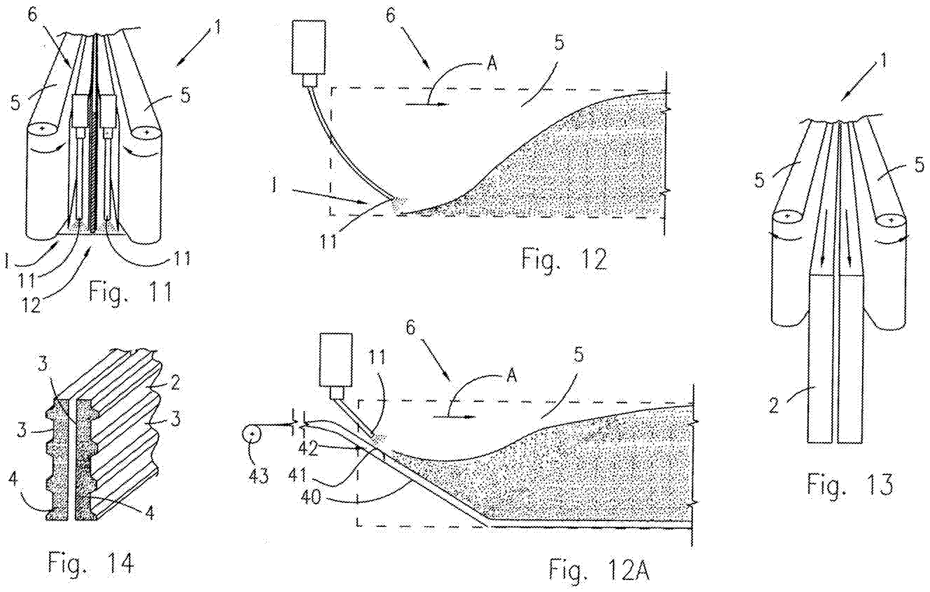

Figure 11 is another schematic view of the first apparatus embodiment of Figure 1;
Figure 12 is a side view that shows schematically the operation of the apparatus during dispensing of polyurethane or phenolic mixture;
Figure 12A shows schematically the operation during dispensing of polyurethane or phenolic mixture, in which a ramp element is arranged for guiding the sliding of the foam downwards enabling the symmetrical expansion thereof downwards and upwards in relation to the pairs of continuous web;
Figure 13 shows schematically the advancement of two continuous panels exiting the foaming station of the apparatus;
Figure 14 shows schematically and partially a pair of panels that are obtainable with an apparatus according to the invention, in which the panels are positioned as they emerge from the foaming station, i.e. they are mutually arranged alongside one another and oriented according to respective vertical planes;

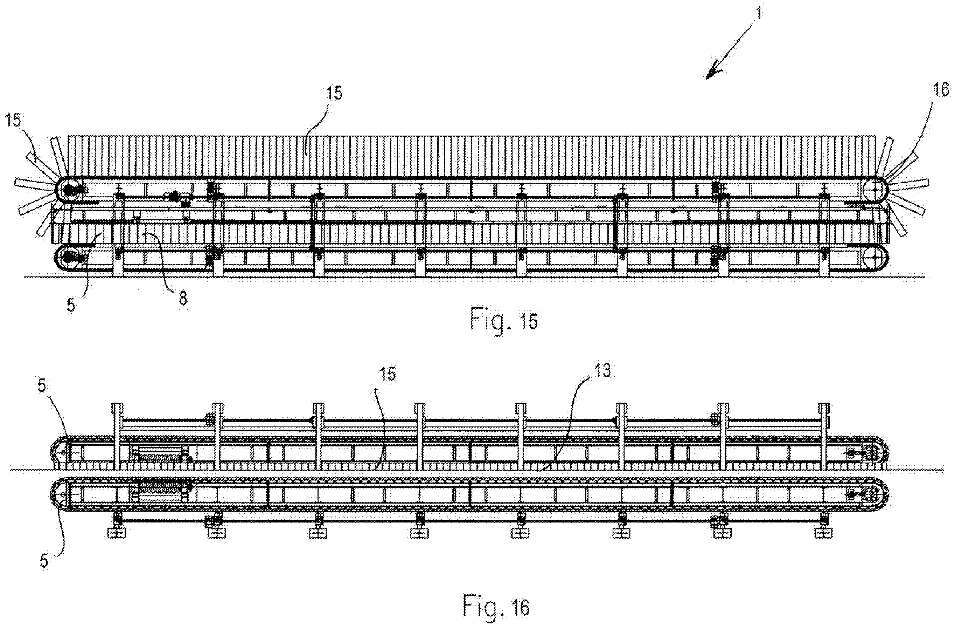

Figures 15 and 16 are respectively a side view and a top view of an apparatus according to the first embodiment;

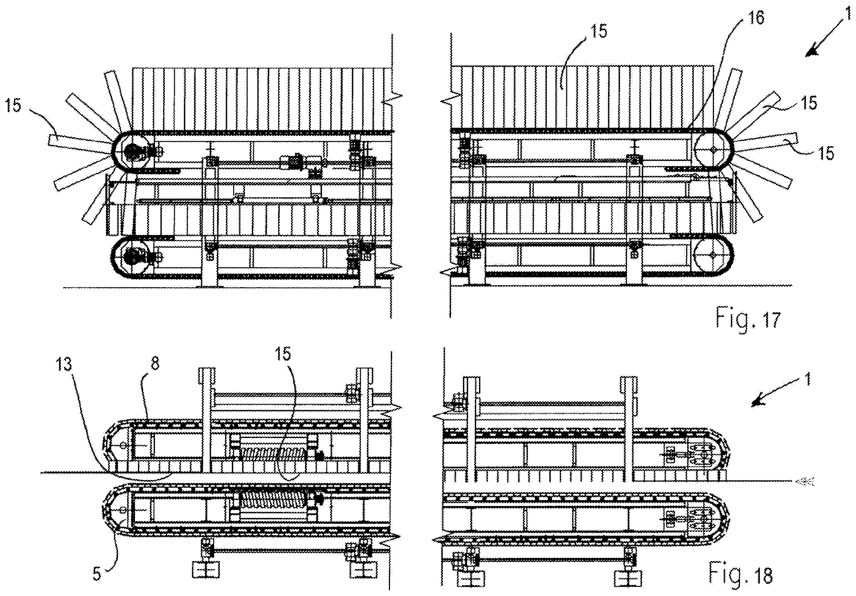

Figures 17 and 18 are enlarged details respectively of the Figures 15 and 16;

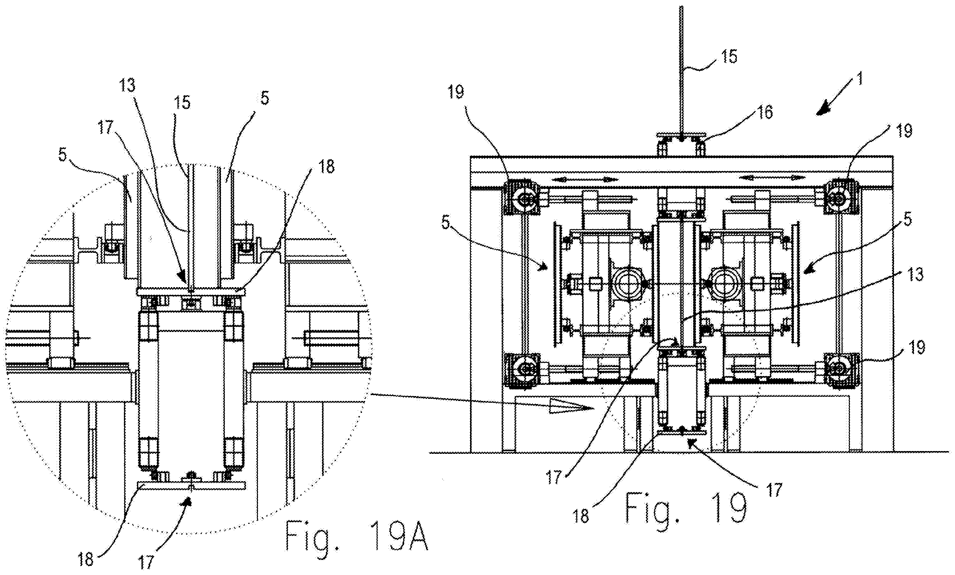

Figure 19 is a front view of the apparatus in Figure 15;
Figure 19A is an enlarged detail of Figure 19;

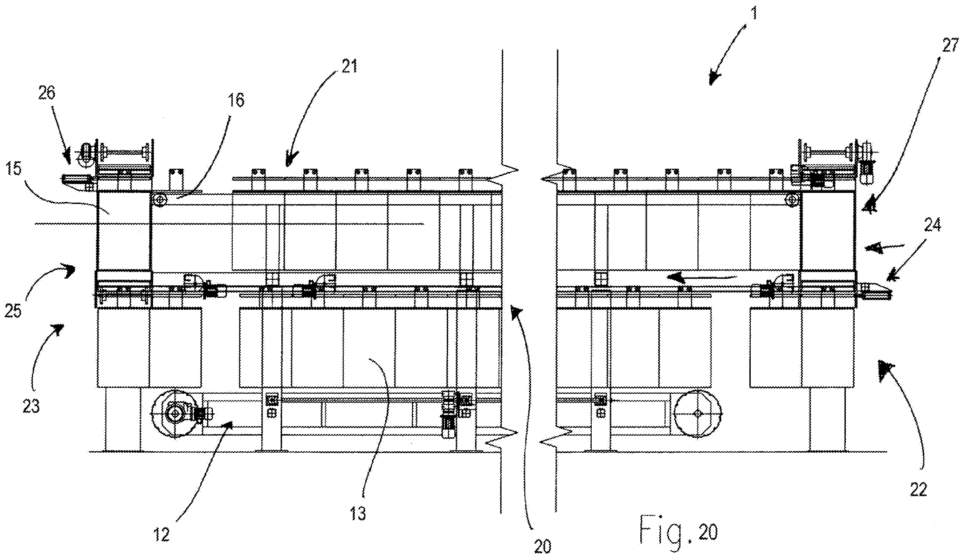

Figure 20 is a fragmentary side view of another apparatus embodiment according to the invention, provided with separating elements, or partitioning elements, arranged for advancing along a closed path and suitable for being raised and lowered cyclically;

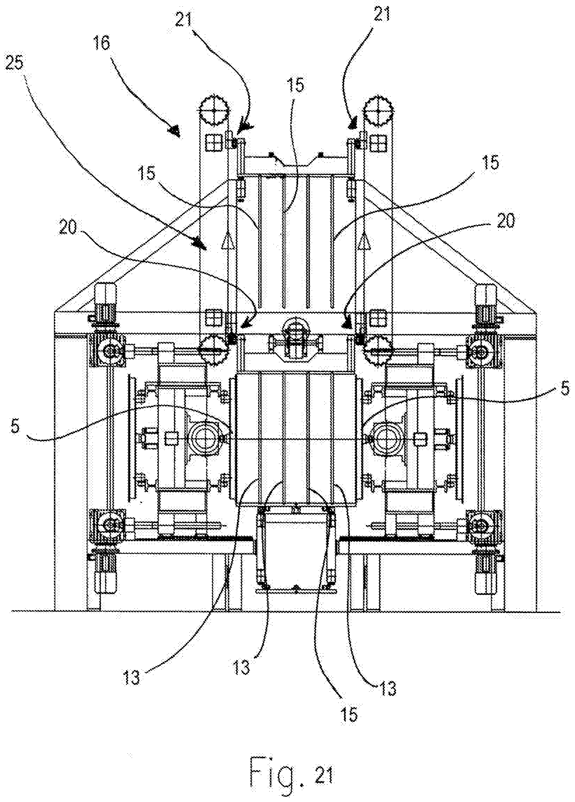

Figure 21 is a front view of the apparatus in Figure 20.

### DETAILED DESCRIPTION OF THE INVENTION

With reference to the attached figures an apparatus 1 is shown for simultaneous and continuous foaming of two or more panels 2, each panel being of the type comprising a pair of external layers 3 of web material between which an intermediate layer 4 is interposed made of expanded polyurethane or phenolic and insulating material.

The intermediate layer 4 is obtained by foaming a polyurethane mixture, obtained from a polyol and an isocyanate or a phenol mixture obtained from a mixture of phenolic resin and acid. Depending on the desired final product, the components of the mixture can contain other ingredients such as catalysts, expanding agents, fireproof substances, reinforcing fibres and/or powders, etc.

The web material that define the external layers 3 of the panels 2 can comprise paper, plastics, flat or corrugated sheet metal, or, more in general, profiled in the desired manner, fabric, wood or wood derivatives, composite laminates, etc.

The panels obtained by means of the apparatus and the method according to the invention can be applied in various fields; for example, such panels can be used for making thermal insulation both in civil and industrial building, for obtaining systems for the exterior insulation finishing system, for making heat-insulating roofs or covers, for constructing internal dividing walls of buildings, for cladding attics, for making refrigerator doors, soundproof doors, refrigerator benches and still other things.

Figures 1 and 2 show a first embodiment of the apparatus 1, comprising a foaming station 6, supplying means (not shown) for supplying in said station and along the horizontal advancement direction A, pairs of continuous web material arranged mutually alongside, in which each of said pairs comprises two web materials 7 which are the precursors of respective external layers 3 for a respective panel 2.

The supplying means is configured in such a manner as to arrange the two web materials 7 of each pair along respective vertical planes V1, V2, V3, V4 inside the foaming station 6, in a mutually separated manner so as to define opposite surfaces for the respective panel to be obtained.

The apparatus 1 comprises a pair of mutually parallel conveying devices 5 that are movable along a horizontal advancement direction A and are placed laterally to the aforesaid foaming station 6. The conveying devices 5 comprise conveyor belt elements 8 that can each comprise a continuous element, or distinct elements that are connected and articulated to one other, of the roller shutter or tile type, wound around rollers or drive toothed wheels 9 that are rotatable around vertical rotating axes B. The conveyor belt elements 8 define in each conveying device 5 a lateral guiding and supporting surface 10, lying according to a vertical plane, suitable for restingly receiving a respective web material 7. As visible from the Figures, the lateral guiding and resting surfaces 10 each receive restingly a more external web than the centre line of the foaming station. The lateral guiding and resting surfaces 10 have the function of contrasting the thrust of the expanding polyurethane or phenolic mixture acting on the web material 7, as disclosed in detail below.

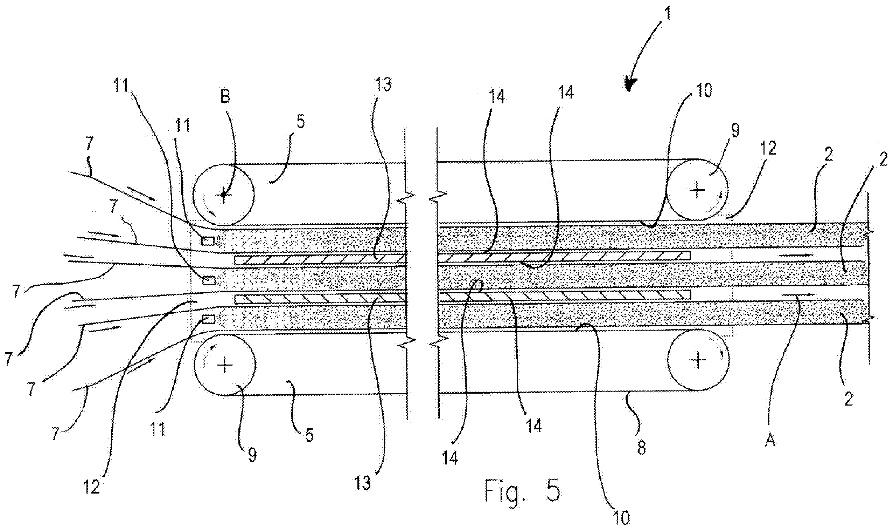

The apparatus 1 comprises a plurality of distinct dispensing nozzles 11, as shown in Figure 5, each of which is arranged for dispensing a respective flow of reactive polyurethane or phenolic mixture between a respective pair of web materials 7. Each dispensing nozzle 11 is positioned for dispensing the flow to a lower zone I or along a ramp element, disclosed better below, interposed between the two webs of material 7 of the respective pair, the ramp element extending from an upper height to a lower height with respect to the advancement direction A. In the apparatus 1 a lower containing device 12 is included (shown schematically in Figures 5 and 11), comprising a horizontal resting surface and the corresponding containing belt to contain below the polyurethane or phenolic mixture poured or sprayed by the dispensing nozzles 11. In many of the attached Figures, the foaming station 6, which is understood for the sake of simplicity, to comprise both the inlet zone into which the liquid polyurethane or phenolic mixture is poured and the successive foam-conveying-and-forming zone, which is not shown to simplify the representation of the apparatus.

The apparatus can be configured to make two or more (depending on the number of panels to be produced simultaneously) strips of web material advance on said lower containing device 12 that are parallel to and next to one another and intended to clad the lower surfaces of the progressively obtained panels. Such strips of web material are all made to advance simultaneously along the foaming station 6 on a horizontal or tilted plane, as disclosed below for another possible embodiment.

In one embodiment of the apparatus, the lower containing of the polyurethane or phenolic mixture is obtained in the initial dispensing section by means of one or more ramp elements 40, interposed between the pairs of continuous web material 7, and defining one or more sliding surfaces 41 tilted downwards with respect to the direction A, on which the mixture advances. The ramp elements 40 have the function of wetting with the polyurethane or phenolic mixture the vertical guiding side surfaces before expansion and obtaining an expansion of the resin symmetrically upwards and downwards during the corresponding sliding motion between webs and walls of the ramp. The wetting action promoted by the ramp elements 40 enables better surface quality of the panels produced to be obtained. In particular, the ramp elements 40 have the function of wetting with the polyurethane or phenolic mixture the vertical side surfaces before expansion and promoting, by virtue of the conveying motion made on the sides of the ramps by the surfaces of the interposed webs sliding there, sliding of the expanding foam that is symmetrical downwards and upwards in relation to the pairs of continuous web. In one possible embodiment, the ramp, or the ramps, extends from a height that is such as to affect the entire height of the side surfaces, this ensuring complete wetting of the vertical guiding side surfaces. In other words, the ramp elements or element can extend from a top zone, corresponding to a horizontal top edge of the panels being made, as far as a lower zone, corresponding to a horizontal lower edge of the progressively obtained panels.

On each ramp element 40 a containing strip 42 of flexible material such as paper or another suitable material is made to advance, initially wrapped on a respective roll 43. Lower unwinding-supplying means is provided that is arranged for progressively unwinding from the respective rolls 43, and supplying the aforesaid containing strips 42, and lower folding means for folding upwards the longitudinal edges of each strip 42 such that each containing strip 42 adopts a substantially U or C-shaped cross section. Each containing strip 42 that is thus folded can perform a containing function in relation to a polyurethane or phenolic mixture that is thus delimited at the bottom.

During dispensing, the polyurethane or phenolic material that is already in a creamy state slides on the ramp element/s 40 and along the walls formed by the vertical webs, wetting the latter, and expands substantially equally downwards and upwards with respect to the pairs of continuous web.

The apparatus 1 further comprises an upper containing device (not shown) having an upper horizontal resting surface for containing from above expanding polyurethane or phenolic mixture upwards. Also on the upper containing device, similarly to the lower containing device, further parallel and adjacent strips of web material can be made to advance that are intended to clad the upper horizontal surfaces of the progressively obtained panels.

The action of upper containment of the expanding polyurethane or phenolic mixture above occurs by means of shaped supports of the intermediate guiding and resting surfaces and the interposing of a separating paper or plastics web. Upper unwinding-supplying-means is provided that unwinds from respective rolls and supplies the further parallel strips of web material. Any upper folding means acts to fold the further upper parallel strips to obtain overturned U-shaped containing cross sections.

The apparatus 1 comprises dividing wall means 13 that is movable in the horizontal advancement direction A, the dividing wall means 13 having the function of contrasting and distributing over the adjacent panels the thrusts exerted by the expanding polyurethane or phenolic mixture transversely to the advancement direction A. In particular, the dividing wall means 13 defines intermediate guiding and supporting surfaces 14 for restingly receiving the adjacent web material 7 of contiguous pairs of the web material. The guiding and supporting surfaces 14 extend longitudinally in the advancement direction A and vertically so as to affect the entire height of the panels 2.

The apparatus 1 embodiments that include the movable dividing wall means 13 are shown in Figures 1, 2, 5-8, 11, 15-23. In particular, in a first embodiment shown in Figures 1, 2, 11, 13, the apparatus 1 comprises a single dividing wall 13 and two dispensing nozzles 11 and is configured for simultaneously producing two continuous panels 2. In this embodiment, the apparatus 1 simultaneously processes two pairs of web material 7, i.e. a first pair comprising two web materials 7a, 7b, intended for a first panel, and a second pair comprising two further web materials 7c and 7d, intended for a second panel to be obtained.

In Figures 5 and 5A one apparatus 1 embodiment is schematised comprising two dividing walls 13, that is able to process simultaneously three distinct panels 2, whereas in Figures 20 and 21 there is shown (as disclosed better below) another apparatus 1 embodiment comprising four dividing walls 13, that is able to process simultaneously five distinct panels 2.

Figures 15 to 19 show a show by way of non-limiting example a first embodiment of the apparatus 1 provided with a single movable dividing wall 13. In this embodiment, the apparatus 1 is provided with a plurality of separating elements 15, or partitioning elements 15, that are supported and driven by a suitable supporting and displacing device 16 (which in Figures 16 and 18 is shown in a plan view only partially) and cooperate mutually to generate, inside the foaming station 6, a dividing wall 13. In Figures 19 and 19A, two conveying devices 5 are visible the position of which is adjustable by respective positioning devices 19. In particular, the distance of each of the two conveying devices 5, from a median plane of the apparatus, in this case with respect to the dividing wall 13, is adjustable in such a manner as to be able to set in a desired manner the thickness of each of the respective panels 2 to be made. In Figures 19 and 19A the apparatus is in a possible configuration in which one of the two conveying devices 5 (in particular the right-hand conveying device 5) is at a distance from the dividing wall 13 that is less than the left-hand conveying device 5. It is only one of the possible configurations that are obtainable with this apparatus. By removing suitably the right-hand and left-hand conveying devices 5 from the dividing wall 13 by the positioning devices 19, it is possible to determine the desired thickness for each of the two panels 2 to be made.

The mutually adjacent separating elements 15 comprise adjacent stick or plate elements that have a flat shape and project themselves on vertical planes.

The supporting and displacing device 16 comprises a chain or belt or other equivalent mechanism 16 that is movable in a closed loop path in a vertical plane and on which the separating or partition elements 15 are mounted in a cantilevered manner. As clearer in Figure 19, the free ends of the separating elements 15, during advancement, are received in a grooved guide 17 that extends longitudinally and is obtained on an appropriate movable belt 18 consisting of flat concatenated elements placed below that advances at the same speed as the supporting and displacing device 16, which can also comprise a belt consisting of flat concatenated elements. A lower chain belt is also provided that supports other flat elements provided with grooves shaped to guide the vertical separating elements 15 and advances at the same speed as the upper chain belt. Coupling the free ends of the separating elements 15 with the grooved guide 17 enables the separating elements 15 to be maintained perfectly in the correct position to avoid undesired misalignments and displacements thereof, transversely with respect to the advancement direction A, which are due to the thrusts of the expanding foam. Each of the two conveying devices 5 can be positioned at a desired distance from the dividing wall 13 by means of a respective positioning device 19 that permits horizontal and orthogonal adjustment thereof with respect to the advancement direction A. In this manner it is possible to set the thickness that it desired for each of the semifinished products in an independent manner from one another, obtaining simultaneously in this manner two continuous panels of different thickness.

Further embodiments of the apparatus 1 provide two or more dividing walls 13 each defined by separating elements 15 each shaped according to what is shown in Figures 15 to 19.

Figures 20 and 21 show a further apparatus 1 embodiment, configured for the continuous production, for example, of five panels simultaneously, and provided with four dividing walls 13 spaced apart from one another. Each dividing wall 13 is defined by an aligned series of separating, or partition, elements 15 that have a flat shape and can extend further in a longitudinal direction than the embodiment of Figures 15 to 19. In this embodiment, the supporting and displacing device 16 comprises one or more first horizontal rails 20 that extend from a first end 22 (inlet into the foaming station 6), to a second end 23 (outlet from the foaming station 6), on which the separating elements 15 are movable as they advance through the foaming station 6. Also in this case the free ends of the separating elements 15 engage with respective grooved guides by analogy with what has been disclosed with reference to Figures 19, 19A, i.e. with grooved guides obtained on concatenated tile or shutter elements, such elements defining together a web advancing at the same speed as the supporting and displacing device 16.

The supporting and displacing device 16 comprises one or more second rails 21, placed at an upper height, i.e. above the first rails 20 thus above the foaming station 6, along which the separating elements 15 are movable to return from the outlet end 23 of the foaming station 6 to the first inlet end 22 in the foaming station. The supporting and displacing device 16 comprises a first transferring unit 25 placed in the second end 23 for removing from the first rails 20, one at a time the separating elements 15 exiting the foaming station 6, so as to raise and transfer it to the second rails 21 the separating elements 15, and a first pushing unit 24, placed in the first end 22, arranged for pushing the separating elements 15 along the first rails 20 from the first 22 to the second 23 end.

The supporting and displacing device 16 comprises, at the second end 23, a second pushing group 26 for pushing the separating elements 15 along the second rails 21 to the first inlet end 22. The second rails 21, in particular, are suitably tilted for facilitating the advancement of the separating elements 15 from the second end 23 to the first end 22 of the apparatus 1. The supporting and displacing device 16 comprises, at the first end 22, a second transferring unit 27 for removing, one at a time, from the second rails 21, the separating elements 15 to lower and position these separating elements 15 on the first rails 20 entering the foaming station 6.

Figures 3, 4, 9 and 10 show the apparatus 1 not according to the invention, without dividing walls.

In particular, Figures 3 and 4 show one apparatus 1 , without dividing walls, which is configured for the continuous production of two panels simultaneously, whereas Figure 9 shows one apparatus 1 , without dividing walls, which is configured for the continuous and simultaneous production of three flat-sides panels. In this case, the apparatus comprises three distinct dispensing nozzles 11.

In Figures 3 and 4, in the foaming station 6 two pairs of web material are supplied, each pair comprising more externally a flat web material 7, and more internally to the foaming station 6, a profiled web material, in particular a corrugated sheet 7e. The two corrugated sheets 7e rest on one another, acting in this manner as intermediate guiding and resting surfaces for one another that are able to contrast the thrusts of the expanding polyurethane or phenolic mixture. This guiding, resting and reciprocal contrasting effect is particularly obtainable when the corrugated profile of the sheets is such as to bestow good stiffness and dimensional stability on the sheets, in particular good resistance to flexure for reasons of use and consequently when they are subjected to transverse thrusts of the expanding polyurethane or phenolic mixture.

If the corrugated profile of the sheets in mutual contact is not such as to obtain the aforesaid resting, guiding and mutual contrasting effect, for example because the recessed and protruding zones of the profile are very spaced apart from one another and do not bestow sufficient mechanical resistance, it is possible to configure the apparatus 1 with suitable dividing wall means 13 as schematised in Figure 8. In this embodiment, the dividing wall means 13 comprises a baffle element unit 28 that is suitable for being interposed between a pair of adjacent corrugated sheets, according to a vertical plane. The baffle elements 28 in this case extend longitudinally in the advancement direction A, are interposed in the recessed zones of the corrugated profiles, defining pairs of opposite guiding and resting surfaces 29 for two corrugated sheets 7f mutually faced and belong to respective contiguous pairs of the web material. Figure 8bis shows a further possible apparatus embodiment provided with a sliding corrugated dividing wall 13a for simultaneously obtaining two corrugated panels 2.

With reference to Figure 8ter, there is shown a further apparatus embodiment for simultaneously obtaining four corrugated panels 2, in which the apparatus comprises two sliding corrugated dividing walls 13a between which a flat dividing part 13 is interposed.

In a further apparatus 1 embodiment (not shown), for producing more than two panels provided with corrugated layers, several units of baffle element units 28 can also be provided that are arranged according to vertical planes that are mutually spaced and parallel, each interposed between a respective pair of mutually facing corrugated sheets.

According to further embodiments of the apparatus 1, one of the conveying devices 5 or both the conveying devices 5 comprising respective shaped guiding and resting surfaces 30 that are able to couple with corrugated sheets or other corrugated materials or is able to impress on a web material, such as paper or plastics film or another deformable material, a corrugated profile. In particular, one or both the conveying devices 5 comprise a plurality of shaped modules 31 that are applied, adjacent to one another, for example magnetically with other systems, on the web element 8. Such shaped modules 31, in a cross section that is orthogonal to the advancement direction A, have externally a surface with a corrugated profile that engages with the surface of a corrugated sheet, or impress a corrugated shape, for example on a web material such as a film of plastics, paper, etc.

In the embodiments of Figure 6, the apparatus 1 comprises a dividing wall 13 and just one of the two conveying devices 5 is provided with shaped modules 31. In the embodiment in Figure 7, the apparatus 1 comprises a dividing wall 13 and both conveying devices 5 are provided with shaped modules 31.

The apparatus, in any of the embodiments disclosed above, can also include depression generating means or means for generating a certain degree of vacuum for making the pairs of sheet material adhere to the respective vertical reporting planes during advancement. More precisely, on the intermediate guiding and resting surfaces 14, 29 and on the walls of the conveying devices 5 distributed air sucking openings are obtained that are connected to pump means or fan means configured for generating a depression or a certain degree of vacuum so as to maintain the pairs of continuous web material 7; 7a, 7b, 7c, 7d; 7e, 7m, 7n; 7f adhering to the vertical planes. Such depression or vacuum generating means can be provided on the intermediate separating elements and/or on the walls of the conveying devices 5.

During operation of any of the apparatus 1 embodiments, pairs of mutually adjacent web material advance through the foaming station 6 and are arranged on vertical planes, a plurality of distinct jets of polyurethane or phenolic mixture dispense simultaneously, each for a respective pair of web materials 7 in a lower zone I interposed between the web materials 7 of a respective pair and the lower container of a polyurethane or phenolic mixture expanding upwards. In other words, the lower zones I are the zones defined between the horizontal lower edges of the web materials 7 of the respective pairs of web materials.

During movement in the advancement direction A and during dispensing of the mixture, each web material is maintained in position by a respective supporting surface, so as to contrast the thrusts of the expansion polyurethane or phenolic mixture. The resting surfaces are represented by belt elements 8 of the conveying devices 5 for the more external web materials 7, by dividing wall/s 13, (defined by the separating elements 15) and/or by the corrugated dividing walls 13a, and/or in some cases, not according to the invention, by the web materials 7 themselves that exchange with one another reciprocal resting and contrasting actions; in this case these web materials 7 in reciprocal contact act as intermediate guiding and resting surfaces for one another.

The conveying elements and/or the vertical separating elements, once the function of keeping the panels separate has terminated, return to the upstream zone of the apparatus to intervene again with the continuously poured polyurethane or phenolic mixture. During the return route to this upstream zone, the conveying elements and/or the vertical separating elements are preheated through a kiln placed on the return route. In this manner, the preheated conveying elements and/or the vertical separating elements contribute to a correct foaming process.

At the outlet from the foaming station 6, the two or more continuous panels can be cut in a desired manner and are already grouped, adjacent, parallel to one another and oriented vertically and separate: they are thus already ready to undergo cooling treatment and do not require further long and expensive movement operations that, as in prior-art apparatuses, are necessary for rotating the panels from horizontal to vertical and subsequently arranging the panels in parallel rows for cooling. Further, owing to the vertical foaming operation, during expansion of the foam, both more effective evacuation of the air upwards is obtained and an absence is obtained of foam beads with not homogeneous cellulation that copy the manner of depositing of resin reacting on the flat surface of the panel - this depositing procedure being made, in the actual traditional state of art, with fast alternating movements of the dispenser or with multiple parallel small jet diffusers - and thus greater homogeneity in the cellular structure of the panels obtained.

From what has been disclosed and shown in the attached drawings it is thus clear that the invention is aimed that a method and apparatus for simultaneous and continuous foaming of two or more panels that enable the continuous production of panels to be accelerated and simplified, in particular that enable the treatment of the panels at the end of foaming operation to be facilitated.

What has been said and shown in the attached drawings has been provided merely by way of example illustrating the innovative features of the foaming apparatus according to as many embodiments as possible; other modifications can be made to the various apparatus embodiments, or to parts thereof, without thereby falling outside the scope of the claims.

## Claims

1. Method for simultaneous and continuous foaming of two or more panels (2), each panel being provided with a pair of external layers (3) of web material (7) between which an intermediate layer (4) of expanded polyurethane or phenolic material is interposed, comprising the steps of:
i. advancing through a foaming station (6) a plurality of pairs of continuous web material (7; 7a, 7b, 7c, 7d; 7e, 7m, 7n; 7f) arranged mutually alongside, each pair comprising two web materials, which are the precursors of respective external layers (3), spaced apart from one another to define opposite surfaces of a respective panel (2) of said two or more panels (2);
ii. dispensing simultaneously a plurality of distinct flows of polyurethane or phenolic mixture, each for a respective pair of web material (7; 7a, 7b, 7c, 7d; 7e, 7m, 7n; 7f), each flow being dispensed into a zone interposed between the web materials of the respective pair and containing below the polyurethane or phenolic mixture, while allowing the polyurethane or phenolic mixture to expand upwards;
iii. wherein, during advancing in said foaming station (6), the web materials (7; 7a, 7b, 7c, 7d; 7e, 7m, 7n; 7f) of each pair lie on respective vertical planes (V1, V2, V3, V4) and move along a horizontal advance direction (A),
iv. distributing the thrusts exerted by the expanding polyurethane or phenolic mixture transversely to said advance direction (A) by means of intermediate guiding and resting surfaces (13, 14, 15, 29) extending along said horizontal advance direction (A);
v. contrasting the thrusts exerted by the expanding polyurethane or phenolic mixture transversely to said advance direction (A) by means of guiding and resting surfaces (10, 30) of two parallel conveying devices (5) that are movable along said horizontal advance direction (A), each conveying device (5) being moved by respective rotating return driving means (9) located at opposite ends.

2. Method according to claim 1, wherein the expanding polyurethane or phenolic mixture is contained above and below by belt conveyors defined by mutually concatenated slab or roller shutter elements.

3. Method according to claim 1 or 2, wherein step ii) comprises dispensing each flow of polyurethane or phenolic mixture into a lower zone (I) interposed between the web materials of the respective pair of web materials (7; 7a, 7b, 7c, 7d; 7e, 7m, 7n; 7f), and containing below the polyurethane or phenolic mixture and allowing the expansion thereof upwards.

4. Method according to claim 1, wherein the vertical side surfaces are wetted and wherein the expansion movement of the forming polyurethane or phenolic foam is balanced in a vertical upward direction and in a downward direction by letting the expandable mixture flow along ramp means (40) comprising slide surfaces (41) tilted downwards with respect to said advance direction (A).

5. Method according to any preceding claim, wherein step (iv) comprises arranging in reciprocal contact the adjacent web materials (7; 7e) of two contiguous pairs in such a manner that said web materials (7e) each act as a guiding and resting surface for the other so as to balance opposite thrusts of the expanding polyurethane or phenolic mixture to prevent displacements of the web materials (7e) transversely to said horizontal advance direction (A).

6. Method according to claim 5, wherein the web materials of contiguous pairs that are placed in reciprocal contact comprise respective corrugated metal sheets (7e), each corrugated metal sheet (7e) acting as a guiding and resting surface for the other to contrast the thrusts of the expanding polyurethane or phenolic mixture.

7. Method according to any one of claims 1 to 6, wherein the step (iv) comprises separating the pairs of web materials from one another by interposing between the pairs of web material one or more vertical partition wall elements (13) that are movable along said advance direction (A), each of said one or more vertical partition wall elements (13, 15) comprising opposite guiding and resting surfaces (14) for restingly receiving on one side the adjacent web material of one pair and from the opposite side the adjacent web material of a further pair.

8. Method according to any one of claims 1 to 7, wherein step (iv) comprises resting the two outermost web materials (7a, 7d; 7m, 7n) on a pair of parallel conveying devices (5) placed laterally to said foaming station (6) along said horizontal advance direction (A), each of said conveying devices (5) comprising a guiding and resting surface (10) for a respective outermost web material (7a, 7d; 7m, 7n).

9. Method according to any preceding claim, wherein the web materials are kept adhering to vertical planes by a vacuum or depression applied to the intermediate guiding and resting surfaces (14, 29) and to the walls of said conveying devices (5).

10. Method according to any preceding claim, wherein the expanding polyurethane or phenolic mixture is contained above and below by a flexible material web, shaped and having "U"-bent-side-edges, which is contained within each pair of the vertical web materials (7; 7a, 7b, 7c, 7d; 7e, 7m, 7n; 7f).

11. Method according to any preceding claim, wherein the expanding polyurethane or phenolic mixture is contained above so as to impose on said two or more progressively produced panels a desired dimension measured in a vertical direction.

12. Method according to the preceding claims wherein said intermediate guiding and resting surfaces (14, 15, 13, 29) for the vertical separation and/or said lateral guiding and resting surfaces (10, 30) are preheated by passing the surfaces through a kiln located along a path of return to the entrance into said foaming station (6).

13. Method according to any preceding claim, further comprising cutting simultaneously or in staggered positions said two or more panels (2) downstream of said foaming station (6) so as to obtain directly groups of panels that are alongside one another, parallel and arranged vertically already prepared for cooling treatment.

14. Apparatus for the simultaneous and continuous foaming of two or more panels (2), each panel being provided with a pair of external layers (3) of web material between which there is interposed an intermediate layer (4) of expanded polyurethane or phenolic material, comprising :
- a foaming station (6);
- supplying means for supplying, in said foaming station (6) and along a horizontal advance direction (A), pairs of mutually alongside continuous web materials (7; 7a, 7b, 7c, 7d; 7e, 7m, 7n; 7f) which are precursors of external layers (3) of respective panels, wherein the supplying means are configured for arranging inside said foaming station (6) the two web materials of each pair along respective vertical planes (V1, V2, V3, V4) and mutually spaced apart so as to define opposite surfaces of a respective panel (2);
- a pair of mutually parallel conveying devices (5) that are located to the sides of said foaming station (6) and are movable along said horizontal advance direction (A), each of said conveying devices (5) comprising a lateral guiding and resting surface (10), lying on a vertical plane (V1) that is suitable for restingly receiving a respective outermost web material (7a; 7d;7m; 7n),
- a plurality of distinct dispensing nozzles (11) arranged for dispensing respective flows of polyurethane or phenolic mixture for respective pairs of web material, each dispensing nozzle (11) being positioned for dispensing the respective flow in a zone interposed between the web material (7) of the respective pair, and
- a lower containing device (12) comprising a horizontal resting surface for supporting and containing below the polyurethane or phenolic mixture dispensed by said plurality of dispensing nozzles (11),
- intermediate guiding and resting surfaces (13, 14, 15, 29) extending along said horizontal advance direction (A) and configured for contrasting and distributing the thrusts exerted by the expanding polyurethane or phenolic mixture transversely to said horizontal advance direction (A).

15. Apparatus according to claim 14, wherein each dispensing nozzle (11) is configured for dispensing a respective flow of polyurethane or phenolic mixture into a zone (I) interposed between the horizontal lower edges of the web materials (7) of the respective pair.

16. Apparatus according to claim 14, further comprising ramp means (40) suitable for being interposed, during operation, between the pairs of web materials (7; 7a, 7b, 7c, 7d; 7e, 7m, 7n; 7f), said ramp means (40) defining one or more slide surfaces (41) tilted downwards according to said advance direction (A), and suitable for slidably supporting the mixture to wet the side surfaces and to enable a symmetrical upward and downward expansion thereof, unwinding-supplying-means being further provided for progressively unwinding from respective rolls (43) and supplying containing strips (42) of flexible material along said ramp means (40), and folding-means suitable for folding the longitudinal edges of each containing strip (42) upwards and impressing to each containing strip (42) a "U"-shaped cross-section suitable for containing below the polyurethane or phenolic mixture.

17. Apparatus according to any one of claims 14 to 16, further comprising an upper containing surface for containing above the upwardly expanding polyurethane or phenolic mixture, there being further provided upper unwinding-supplying-means arranged for unwinding from respective rolls and supplying further parallel containing strips of web material suitable for preventing the contact of said upper containing surface with the foam, there being furthermore provided upper folding means arranged for folding said further parallel containing strips of web material for obtaining a flexible cross section having the edges folded into a "U" shape for the upper containment of the polyurethane or phenolic mixture.

18. Apparatus according to any one of claims 12 to 17, wherein said conveying devices (5) comprise transport-belt-elements or concatenated flat plate elements (8) wound around driving rollers or toothed wheels (9) rotatable around vertical rotation axes (B).

19. Apparatus according to any one of claims 14 to 18, wherein said intermediate guiding and resting surfaces are defined by vertical partition wall means (13, 15) that are movable in said horizontal advance direction (A) and configured for restingly receiving the adjacent web materials of contiguous pairs of web materials and contrasting the thrusts exerted by the expanding polyurethane or phenolic mixture transversely to said advance direction (A), said vertical partition wall means (13) engaging, when they advance along said foaming station (6), below with respective grooved guiding means (17, 18).

20. Apparatus according to claim 19, wherein said vertical partition wall means (13) comprise one or more baffle element units (28) suitable for being interposed between pairs of adjacent corrugated metal sheets, each unit comprising baffle elements distributed on a vertical plane and having pairs of opposite intermediate guiding and resting surfaces (29) suitable for receiving from one side a corrugated metal sheet (7f), and from the opposite side another corrugated metal sheet (7f) of a contiguous pair.

21. Apparatus according to claim 19, wherein said vertical partition wall means (13) comprise a plurality of separating elements (15) that are supported and driven by a supporting and displacing device (16).

22. Apparatus according to claim 21, wherein said separating elements comprise adjacent stick or plate elements (15) that have a flat shape and project themselves on vertical planes.

23. Apparatus according to claim 22, wherein said separating elements comprise adjacent slat elements (15) having a shaped cross section that is suitable for coupling with a corrugated metal sheet or other corrugated material or that is suitable for impressing on a web material, such as paper of plastics film, a corrugated profile.

24. Apparatus according to any one of claims 21 to 23, wherein said supporting and displacing device (16) comprises a chain or belt device on which said separating elements (15) are mounted, said chain or belt device being movable in a closed loop path lying on a vertical plane.

25. Apparatus according to any one of claims 21 to 24, wherein said supporting and displacing device (16) comprises first horizontal track means (20) that extend from a first end (22) to a second end (23) of said foaming station (6), along which said separating elements (15) advance through said foaming station (6), second track means (21) located above said first track means (20), outside said foaming station (6), along which second track means (21) said separating elements (15) are movable to return from said second end (23) to said first end (22), a first pushing group (24) for pushing said separating elements (15) along said first track means (20) from the first (22) to the second (23) end, a first transferring unit (25), at said second end (23), for removing one at a time from said first horizontal track means (20) the separating elements (15) exiting from said foaming station (6), so as to lift and transfer the separating elements (15) to said second track means (21), a second pushing group (26) for pushing said separating elements (15) along said second track means (21), and a second transferring unit (27), at said first end (22), for removing one at a time from said second track means (21) the separating elements (15) to lower and position the separating elements (15) on said first horizontal track means (20) entering said foaming station (6).

26. Apparatus according to any one of claims 14 to 25, wherein one of said conveying devices (5) or both the conveying devices (5) comprise respective guiding and resting surfaces (30) having cross-section which are shaped with a corrugated profile suitable for coupling and mating with a corrugated metal sheet or other corrugated material or for impressing on a flexible web material, such as paper or a plastics film, a corrugated cross profile.

27. Apparatus according to one or more of claims 14 to 26, wherein on said intermediate guiding and resting surfaces (14, 29) and on the walls of said conveying devices (5) there are obtained distributed air-sucking-openings which are connected to fan-means or pump-means configured for generating a depression or a certain degree of vacuum to maintain the pairs of continuous web material (7; 7a, 7b, 7c, 7d; 7e, 7m, 7n; 7f) adhering to the respective vertical planes.

28. Apparatus according to any one of claims 19 to 27, further comprising a kiln for preheating said vertical partition wall means (13, 15) and/or said lateral conveying devices (5), said kiln being located along a return path of said vertical partition wall means (13, 15) towards the entrance into said foaming station (6).

## Patentansprüche

1. Verfahren zum gleichzeitigen und kontinuierlichen Aufschäumen von zwei oder mehr Platten (2), wobei jede Platte mit einem Paar äußerer Lagen (3) von Bahnenmaterial (7) versehen wird, zwischen die eine Zwischenschicht (4) aus expandiertem Polyurethan- oder Phenolmaterial eingefügt wird, umfassend die Schritte des:
i. durch eine Aufschäumstation (6) Voranbewegens einer Vielzahl von Paaren von kontinuierlichem Bahnenmaterial (7; 7a, 7b, 7c, 7d; 7e, 7m, 7n; 7f), die längsseits zueinander angeordnet sind, wobei jedes Paar zwei Bahnenmaterialien umfasst, welche die Vorläufer jeweiliger äußerer Lagen (3) sind, voneinander beabstandet, um entgegengesetzte Oberflächen einer jeweiligen Platte (2) der besagten zwei oder mehr Platten (2) zu definieren;
ii. gleichzeitigen Abgebens einer Vielzahl getrennter Ströme von Polyurethan- oder Phenolgemisch, jeder für ein jeweiliges Paar von Bahnenmaterial (7; 7a, 7b, 7c, 7d; 7e, 7m, 7n; 7f), wobei jeder Strom in eine Zone abgegeben wird, die zwischen den Bahnenmaterialien des jeweiligen Paars eingefügt ist und unten das Polyurethan- oder Phenolgemisch enthält, während das Expandieren des Polyurethan- oder Phenolgemischs nach oben gestattet wird;
iii. wobei, während des Voranbewegens in der Aufschäumstation (6), die Bahnenmaterialien (7; 7a, 7b, 7c, 7d; 7e, 7m, 7n; 7f) jedes Paars in jeweiligen vertikalen Ebenen (V1, V2, V3, V4) liegen und sich gemäß einer horizontalen Vorschubrichtung (A) bewegen,
iv. Verteilens der von dem expandierenden Polyurethan- oder Phenolgemisch transversal zu der Vorschubrichtung (A) ausgeübten Druckkräfte mittels dazwischenliegender Führungs- und Anlageflächen (13, 14, 15, 29), die sich entlang der horizontalen Vorschubrichtung (A) erstrecken;
v. Entgegenwirkens den von dem expandierenden Polyurethan- oder Phenolgemisch transversal zu der Vorschubrichtung (A) ausgeübten Druckkräften mittels Führungs- und Anlageflächen (10, 30) zweier paralleler Fördervorrichtungen (5), die entlang der horizontalen Vorschubrichtung (A) bewegbar sind, wobei jede Fördervorrichtung (5) durch an entgegengesetzten Enden angeordnete jeweilige rotierende Rückholantriebsmittel (9) bewegt wird.

2. Verfahren nach Anspruch 1, wobei das expandierende Polyurethan- oder Phenolgemisch oben und unten durch Förderbänder eingefasst ist, die durch miteinander verkettete Platten- oder Rolladenelemente definiert sind.

3. Verfahren nach Anspruch 1 oder 2, wobei Schritt ii) das Abgeben jedes Stroms von Polyurethan- oder Phenolgemisch in eine untere Zone (I), die zwischen den Bahnenmaterialien des jeweiligen Paars von Bahnenmaterialien (7; 7a, 7b, 7c, 7d; 7e, 7m, 7n; 7f) eingefügt ist, und das unten Enthalten des Polyurethan- oder Phenolgemischs und Gestatten von dessen Expansion nach oben umfasst.

4. Verfahren nach Anspruch 1, wobei die vertikalen Seitenflächen benetzt werden und wobei die Expansionsbewegung des sich formenden Polyurethan- oder Phenolschaums in einer vertikalen Aufwärtsrichtung und in einer Abwärtsrichtung ausgeglichen wird, indem man das expandierbare Gemisch entlang Rampenmitteln (40) strömen lässt, die Gleitflächen (41) umfassen, welche in Bezug auf die Vorschubrichtung (A) nach unten geneigt sind.

5. Verfahren nach einem der vorhergehenden Ansprüche, wobei Schritt (iv) das in gegenseitigem Kontakt Anordnen der benachbarten Bahnenmaterialien (7; 7e) zweier aneinandergrenzender Paare auf solche Weise umfasst, dass die Bahnenmaterialien (7e) jedes als Führungs- und Anlagefläche für das andere wirken, um entgegengesetzte Druckkräfte des expandierenden Polyurethan- oder Phenolgemischs auszugleichen, um Verlagerungen der Bahnenmaterialien (7e) transversal zu der horizontalen Vorschubrichtung (A) zu verhindern.

6. Verfahren nach Anspruch 5, wobei die Bahnenmaterialien aneinandergrenzender Paare, die in gegenseitigen Kontakt gebracht werden, jeweilige Wellblechplatten (7e) umfassen, wobei jede Wellblechplatte (7e) als Führungs- und Anlagefläche für die andere dient, um den Druckkräften des expandierenden Polyurethan- oder Phenolgemischs entgegenzuwirken.

7. Verfahren nach einem der Ansprüche 1 bis 6, wobei der Schritt (iv) das Trennen der Paare von Bahnenmaterialien voneinander durch das Einfügen eines oder mehrerer vertikaler Trennwandelemente (13), die entlang der Vorschubrichtung (A) bewegbar sind, zwischen den Paaren von Bahnenmaterial umfasst, wobei jedes der einen oder mehreren vertikalen Trennwandelemente (13, 15) gegenüberliegende Führungs- und Anlageflächen (14) umfasst, um von einer Seite das benachbarte Bahnenmaterial eines Paars und von der gegenüberliegenden Seite das benachbarte Bahnenmaterial eines weiteren Paars anliegend zu empfangen.

8. Verfahren nach einem der Ansprüche 1 bis 7, wobei Schritt (iv) das Anlegen der zwei äußersten Bahnenmaterialien (7a, 7d; 7m, 7n) an ein Paar von parallelen Fördervorrichtungen (5), die lateral zu der Aufschäumstation (6) gemäß der horizontalen Vorschubrichtung (A) angeordnet sind, umfasst, wobei jede der Fördervorrichtungen (5) eine Führungs- und Anlagefläche (10) für ein jeweiliges äußerstes Bahnenmaterial (7a, 7d; 7m, 7n) umfasst.

9. Verfahren nach einem der vorhergehenden Ansprüche, wobei die Bahnenmaterialien durch ein an die zwischenliegenden Führungs- und Anlageflächen (14, 29) und an die Wände der Fördervorrichtungen (5) angelegtes Vakuum oder angelegten Unterdruck an vertikalen Ebenen haftend gehalten werden.

10. Verfahren nach einem der vorhergehenden Ansprüche, wobei das expandierende Polyurethan- oder Phenolgemisch oben und unten durch eine flexible Materialbahn, die mit "U"-förmig gebogenen Seitenkanten gebildet ist und diese aufweist, welche in jedem Paar der vertikalen Bahnenmaterialien (7; 7a, 7b, 7c, 7d; 7e, 7m, 7n; 7f) enthalten ist, eingefasst wird.

11. Verfahren nach einem der vorhergehenden Ansprüche, wobei das expandierende Polyurethan- oder Phenolgemisch oben eingefasst wird, um den zwei oder mehr fortschreitend produzierten Platten eine gewünschte Abmessung, in vertikaler Richtung gemessen, aufzuerlegen.

12. Verfahren nach den vorhergehenden Ansprüchen, wobei die zwischenliegenden Führungs- und Anlageflächen (14, 15, 13, 29) für die vertikale Trennung und/oder die lateralen Führungs- und Anlageflächen (10, 30) vorgeheizt werden, indem die Flächen durch einen Ofen geführt werden, der entlang einer Rücklaufbahn zu dem Einlass in die Aufschäumstation (6) angeordnet ist.

13. Verfahren nach einem der vorhergehenden Ansprüche, weiter das gleichzeitig oder in versetzten Positionen Abschneiden der zwei oder mehr Platten (2) stromabwärts von der Aufschäumstation (6) umfassend, um direkt Gruppen von Platten zu erhalten, die sich entlang einander befinden, parallel und vertikal angeordnet, bereits zur Kühlbehandlung vorbereitet.

14. Vorrichtung zum gleichzeitigen und kontinuierlichen Aufschäumen von zwei oder mehr Platten (2), wobei jede Platte mit einem Paar von äußeren Lagen (3) aus Bahnenmaterial versehen ist, zwischen die eine Zwischenschicht (4) aus expandiertem Polyurethan- oder Phenolmaterial eingefügt ist, umfassend:
- eine Aufschäumstation (6);
- Zuführmittel zum Zuführen, in der Aufschäumstation (6) und gemäß einer horizontalen Vorschubrichtung (A), von Paaren von längsseits zueinander befindlichen, kontinuierlichen Bahnenmaterialien (7; 7a, 7b, 7c, 7d; 7e, 7m, 7n; 7f), welche Vorläufer äußerer Lagen (3) jeweiliger Platten sind, wobei die Zuführmittel dazu eingerichtet sind, die zwei Bahnenmaterialien jedes Paars in der Aufschäumstation (6) entlang jeweiliger vertikaler Ebenen (V1, V2, V3, V4) und voneinander beabstandet anzuordnen, um entgegengesetzte Oberflächen einer jeweiligen Platte (2) zu definieren;
- ein Paar zueinander paralleler Fördervorrichtungen (5), die sich an den Seiten der Aufschäumstation (6) befinden und gemäß der horizontalen Vorschubrichtung (A) bewegbar sind, wobei jede der Fördervorrichtungen (5) eine laterale Führungs- und Anlagefläche (10) umfasst, welche in einer vertikalen Ebene (V1) liegt, die zum anliegenden Empfangen eines jeweiligen äußersten Bahnenmaterials (7a; 7d; 7m; 7n) geeignet ist,
- eine Vielzahl getrennter Abgabedüsen (11), die zur Abgabe jeweiliger Ströme von Polyurethan- oder Phenolgemisch für jeweilige Paare von Bahnenmaterial eingerichtet sind, wobei jede Abgabedüse (11) zur Abgabe des jeweiligen Stroms in eine zwischen das Bahnenmaterial (7) des jeweiligen Paars eingefügte Zone positioniert ist, und
- eine untere Behältervorrichtung (12), welche eine horizontale Anlagefläche zum unten Stützen und Enthalten des von der Vielzahl von Abgabedüsen (11) abgegebenen Polyurethan- oder Phenolgemischs umfasst,
- zwischenliegende Führungs- und Anlageflächen (13, 14, 15, 29), die sich gemäß der horizontalen Vorschubrichtung (A) erstrecken und zum Entgegenwirken und Verteilen der von dem expandierenden Polyurethan- oder Phenolgemisch transversal zu der horizontalen Vorschubrichtung (A) ausgeübten Druckkräfte eingerichtet sind.

15. Vorrichtung nach Anspruch 14, wobei jede Abgabedüse (11) zur Abgabe eines jeweiligen Stroms von Polyurethan- oder Phenolgemisch in eine zwischen die horizontalen unteren Ränder der Bahnenmaterialien (7) des jeweiligen Paars eingefügte Zone (I) eingerichtet ist.

16. Vorrichtung nach Anspruch 14, weiter Rampenmittel (40) umfassend, die dazu geeignet sind, während des Betriebs zwischen den Paaren von Bahnenmaterialien (7; 7a, 7b, 7c, 7d; 7e, 7m, 7n; 7f) eingefügt zu werden, wobei die Rampenmittel (40) eine oder mehrere Gleitflächen (41), die gemäß der Vorschubrichtung (A) abwärts geneigt sind, definieren und geeignet sind, das Gemisch gleitend zu unterstützen, um die Seitenflächen zu benetzen und um eine symmetrische Expansion besagten Gemischs nach oben und nach unten zu ermöglichen, wobei weiter Abroll-Zuführmittel zum fortschreitenden von entsprechenden Rollen (43) Abwickeln und Zuführen von Einfassungsstreifen (42) aus flexiblem Material entlang den Rampenmitteln (40) vorgesehen sind, und Faltmittel, die geeignet sind, die Längsränder jedes Einfassungsstreifens (42) aufwärts zu falten und jedem Einfassungsstreifen (42) einen "U"-förmigen Querschnitt einzuprägen, der geeignet ist, unten das Polyurethan- oder Phenolgemisch zu enthalten.

17. Vorrichtung nach einem der Ansprüche 14 bis 16, weiter eine obere einfassende Oberfläche umfassend, um das nach oben expandierende Polyurethan- oder Phenolgemisch einzufassen, wobei weiter obere Abwickel- Zuführ-Mittel zum Abwickeln von entsprechenden Rollen und weiteren Zuführen von parallelen Einfassungsstreifen aus Bahnenmaterial, die geeignet sind, den Kontakt der oberen Einfassungsfläche mit dem Schaum zu verhindern, vorgesehen sind, wobei dort weiterhin obere Faltmittel vorgesehen sind, die zum Falten der weiteren parallelen Einfassungsstreifen aus Bahnenmaterial eingerichtet sind, um einen flexiblen Querschnitt zu erhalten, dessen Ränder zum oberen Einfassen des Polyurethan- oder Phenolgemischs in eine "U"-Form gefaltet sind.

18. Vorrichtung nach einem der Ansprüche 12 bis 17, wobei die Fördervorrichtungen (5) Transportbandelemente oder verkettete flache Plattenelemente (8), die um Antriebsrollen herumgeführt sind, oder um vertikale Rotationsachsen (B) rotierbare Zahnräder (9) umfassen.

19. Vorrichtung nach einem der Ansprüche 14 bis 18, wobei die zwischenliegenden Führungs- und Anlageflächen durch vertikale Trennwandmittel (13, 15) definiert sind, die in der horizontalen Vorschubrichtung (A) bewegbar sind und zum anliegenden Empfangen der benachbarten Bahnenmaterialien aneinandergrenzender Paare von Bahnenmaterialien und dem Entgegenwirken der von dem expandierenden Polyurethan- oder Phenolgemisch transversal zu der Vorschubrichtung (A) ausgeübten Druckkräfte eingerichtet sind, wobei die vertikalen Trennwandmittel (13), wenn sie sich entlang der Aufschäumstation (6) voranbewegen, unten mit jeweiligen gerillten Führungsmitteln (17,18) in Eingriff treten.

20. Vorrichtung nach Anspruch 19, wobei die vertikalen Trennwandmittel (13) eine oder mehrere Ablenkelementeinheiten (28) umfassen, die zum Einfügen zwischen Paaren von benachbarten Wellblechplatten geeignet sind, wobei jede Einheit Ablenkelemente umfasst, die in einer vertikalen Ebene verteilt sind und Paare von entgegengesetzten zwischenliegenden Führungs- und Anlageflächen (29) aufweisen, die zum Empfangen einer Wellblechplatte (7f) von einer Seite und von der entgegengesetzten Seite einer anderen Wellblechplatte (7f) eines aneinandergrenzenden Paars geeignet sind.

21. Vorrichtung nach Anspruch 19, wobei die vertikalen Trennwandmittel (13) eine Vielzahl von Trennmitteln (15) umfassen, die von einer Stütz- und Verlagerungsvorrichtung (16) getragen und angetrieben werden.

22. Vorrichtung nach Anspruch 21, wobei die Trennelemente benachbarte Stab- oder Plattenelemente (15) umfassen, die eine flache Form haben und sich auf vertikale Ebenen projizieren.

23. Vorrichtung nach Anspruch 22, wobei die Trennelemente benachbarte Lattenelemente (15) umfassen, die einen geformten Querschnitt aufweisen, der zum Ankoppeln an einer Wellblechplatte oder anderem geripptem Material geeignet ist oder der zum Einprägen eines Rillenprofils auf ein Bahnenmaterial, wie etwa Papier oder Kunststofffolie, geeignet ist.

24. Vorrichtung nach einem der Ansprüche 21 bis 23, wobei die Stütz- und Verlagerungsvorrichtung (16) eine Ketten- oder Bandvorrichtung umfasst, woran die Trennelemente (15) montiert sind, wobei die Ketten- oder Bandvorrichtung in einer geschlossenen Schleifenbahn, die in einer vertikalen Ebene liegt, bewegbar ist.

25. Vorrichtung nach einem der Ansprüche 21 bis 24, wobei die Stütz- und Verlagerungsvorrichtung (16) erste horizontale Schienenmittel (20) umfasst, die sich von einem ersten Ende (22) zu einem zweiten Ende (23) der Aufschäumstation (6) erstrecken, entlang derer sich die Trennelemente (15) durch die Aufschäumstation (6) voranbewegen, zweite Schienenmittel (21), die sich über den ersten Schienenmitteln (20) befinden, außerhalb der Aufschäumstation (6), entlang welcher zweiten Schienenmittel (21) die Trennmittel (15) bewegbar sind, um von dem zweiten Ende (23) zu dem ersten Ende (22) zurückzukehren, eine erste Schiebegruppe (24) zum Schieben der Trennmittel (15) entlang des ersten Schienenmittels (20) von dem ersten (22) zu dem zweiten (23) Ende, eine erste Übergabeeinheit (25), an dem zweiten Ende (23), zum eines nach dem anderen von dem ersten horizontalen Schienenmittel (20) Entfernen der die Aufschäumstation (6) verlassenden Trennelemente (15), um die Trennelemente (15) anzuheben und auf die zweiten Schienenmittel (21) zu übertragen, eine zweite Schiebegruppe (26) zum Schieben der Trennelemente (15) entlang der zweiten Schienenmittel (21), und eine zweite Übergabeeinheit (27), an dem ersten Ende (22), zum eines nach dem anderen von dem zweiten Schienenmittel (21) Entfernen der Trennelemente (15), um die Trennelemente (15) abzusenken und auf dem ersten horizontalen Schienenmittel (20), das in die Aufschäumstation (6) eintritt, zu positionieren.

26. Vorrichtung nach einem der Ansprüche 14 bis 25, wobei eine der Fördervorrichtungen (5) oder beide Fördervorrichtungen (5) jeweilige Führungs- und Anlageflächen (30) umfassen, die Querschnitte aufweisen, die mit einem Rillenprofil geformt sind, das zum Ankoppeln und Ineinanderpassen mit einer Wellblechplatte oder anderem gerippten Material oder zum Einprägen eines gerippten Querschnittsprofils auf ein flexibles Bahnenmaterial, wie etwa Papier oder eine Kunststofffolie, geeignet ist.

27. Vorrichtung nach einem oder mehreren der Ansprüche 14 bis 26, wobei auf den zwischenliegenden Führungs- und Anlageflächen (14, 29) und an den Wänden der Fördervorrichtungen (5) verteilte Luftansaugöffnungen angebracht sind, die mit Gebläsemitteln oder Pumpenmitteln verbunden sind, die zur Erzeugung eines Unterdrucks oder eines gewissen Grades von Vakuum eingerichtet sind, um die Paare von kontinuierlichem Bahnenmaterial (7; 7a, 7b, 7c, 7d; 7e, 7m, 7n; 7f) an den jeweiligen vertikalen Ebenen geheftet zu halten.

28. Vorrichtung nach einem der Ansprüche 19 bis 27, weiter einen Ofen zum Vorheizen der vertikalen Trennwandmittel (13, 15) und/oder der lateralen Fördervorrichtungen (5) umfassend, wobei der Ofen sich entlang einer Rücklaufbahn der vertikalen Trennwandmittel (13,15) zu dem Einlass in die Aufschäumstation (6) hin befindet.

## Revendications

1. Procédé pour la transformation en mousse de manière simultanée et en continu de deux panneaux (2) ou plus, chaque panneau étant muni d'une paire de couches externes (3) de matière en bande (7) entre lesquelles est intercalée une couche intermédiaire (4) d'une matière phénolique ou de polyuréthane expansé, comprenant les étapes consistant à :
i. faire progresser à travers un poste de transformation en mousse (6) plusieurs paires de matières continues en bandes (7 ; 7a, 7b, 7c, 7d ; 7e, 7m, 7n ; 7f) disposées les unes le long des autres, chaque paire comprenant deux matières en bandes qui représentent les précurseurs de couches externes respectives (3), espacées l'une de l'autre pour définir des surfaces opposées d'un panneau respectif (2) desdits deux panneaux (2) ou plus ;
ii. distribuer de manière simultanée plusieurs courants distincts d'un mélange phénolique ou de polyuréthane, chacun pour une paire respective de matières en bandes (7 ; 7a, 7b, 7c, 7d ; 7e, 7m, 7n ; 7f), chaque courant étant distribué dans une zone intercalée entre les matières en bandes de la paire respective et retenant en dessous le mélange phénolique ou de polyuréthane, tout en permettant une expansion du mélange phénolique ou de polyuréthane vers le haut ;
iii. dans lequel, au cours de la progression dans ledit poste de transformation en mousse (6), les matières en bandes (7 ; 7a, 7b, 7c, 7d ; 7e, 7m, 7n ; 7f) de chaque paire sont disposées sur des plans verticaux respectifs (V1, V2, V3, V4) et se déplacent dans une direction de progression horizontale (A) ;
iv. distribuer les poussées exercées par le mélange phénolique ou de polyuréthane en expansion en direction transversale par rapport à ladite direction de progression (A) au moyen de surfaces intermédiaires de guidage et d'appui (13, 14, 15, 29) s'étendant le long de ladite direction de progression horizontale (A) ;
v. s'opposer aux poussées exercées par le mélange phénolique ou de polyuréthane en expansion, en direction transversale par rapport à ladite direction de progression (A) au moyen de surfaces de guidage et d'appui (10, 30) de deux dispositifs de transport parallèles (5) qui sont mobiles dans ladite direction de progression horizontale (A), chaque dispositif de transport (5) étant mis en mouvement par des moyens rotatifs de renvoi respectifs (9) disposés à des extrémités opposées.

2. Procédé selon la revendication 1, dans lequel le mélange phénolique ou de polyuréthane en expansion est retenu au-dessus et en dessous par des courroies transporteuses définies par des éléments en forme de volets roulants ou de plaques enchaînées les uns aux autres.

3. Procédé selon la revendication 1 ou 2, dans lequel l'étape ii) comprend la distribution de chaque courant de mélange phénolique ou de polyuréthane dans une zone inférieure (I) intercalée entre les matières en bandes de la paire respective de matières en bandes (7 ; 7a, 7b, 7c, 7d ; 7e, 7m, 7n ; 7f), et retenant en dessous le mélange phénolique ou de polyuréthane et permettant son expansion vers le haut.

4. Procédé selon la revendication 1, dans lequel les surfaces latérales verticales sont humidifiées et dans lequel le mouvement d'expansion de la transformation en mousse phénolique ou de polyuréthane est équilibré dans une direction ascendante verticale et dans une direction descendante en laissant le mélange expansible s'écouler le long de moyens en forme de rampes (40) comprenant des surfaces de glissement (41) inclinées vers le bas par rapport à ladite direction de progression (A).

5. Procédé selon l'une quelconque des revendications précédentes, dans lequel l'étape (iv) comprend la disposition en contact réciproque des matières adjacentes en bande (7 ; 7e) de deux paires contiguës d'une manière telle que lesdites matières en bandes (7e) agissent chacune à titre de surface de guidage et d'appui pour l'autre de façon à équilibrer des poussées opposées du mélange phénolique ou de polyuréthane en expansion pour empêcher des déplacements des matières en bandes (7e) en direction transversale par rapport à ladite direction de progression horizontale (A).

6. Procédé selon la revendication 5, dans lequel les matières en bandes de paires contiguës qui sont mises en contact réciproque comprennent des feuilles métalliques ondulées respectives (7e), chaque feuille métallique ondulée (7e) faisant office de surface de guidage et d'appui pour l'autre afin de s'opposer aux poussées du mélange phénolique ou de polyuréthane en expansion.

7. Procédé selon l'une quelconque des revendications 1 à 6, dans lequel l'étape (iv) comprend le fait de séparer les paires de matières en bandes l'une de l'autre en intercalant entre les paires de matières en bandes un ou plusieurs éléments verticaux (13) en forme de parois de séparation qui sont mobiles dans ladite direction de progression (A), chacun desdits un ou plusieurs éléments verticaux en forme de parois de séparation (13, 15) comprenant des surfaces opposées de guidage et d'appui (14) pour recevoir en appui d'un côté la matière en bande adjacente d'une paire et du côté opposé la matière en bande adjacente d'une autre paire.

8. Procédé selon l'une quelconque des revendications 1 à 7, dans lequel l'étape (iv) comprend le fait d'offrir un appui aux deux matières en bandes les plus extérieures (7a, 7d ; 7m, 7n) d'une paire de dispositifs de transport parallèles (5) placés latéralement par rapport audit poste de transformation en mousse (6) dans ladite direction de progression horizontale (A), chacun desdits dispositifs de transport (5) comprenant une surface de guidage et d'appui (10) pour une matière en bande respective la plus extérieure (7a, 7d ; 7m, 7n).

9. Procédé selon l'une quelconque des revendications précédentes, dans lequel les matières en bandes sont maintenues à l'état adhéré à des plans verticaux via un vide ou une dépression appliqué sur les surfaces intermédiaires de guidage et d'appui (14, 29) et sur les parois desdits dispositifs de transport (5).

10. Procédé selon l'une quelconque des revendications précédentes, dans lequel le mélange phénolique ou de polyuréthane en expansion est retenu au-dessus et en dessous par une bande de matière flexible façonnée et possédant des bords latéraux pliés en « U », qui est contenue au sein de chaque paire des matières verticales en bandes (7 ; 7a, 7b, 7c, 7d ; 7e, 7m, 7n ; 7f).

11. Procédé selon l'une quelconque des revendications précédentes, dans lequel le mélange phénolique ou de polyuréthane en expansion est retenu au-dessus de façon à imposer auxdits deux panneaux ou plus fabriqués de manière progressive une dimension désirée, mesurée dans une direction verticale.

12. Procédé selon l'une quelconque des revendications précédentes, dans lequel lesdites surfaces intermédiaires de guidage et d'appui (14, 15, 13, 29) pour la séparation verticale et/ou lesdites surfaces latérales de guidage et d'appui (10, 30) sont préchauffées en faisant passer les surfaces à travers un four disposé dans un chemin de retour menant à l'entrée dans ledit poste de transformation en mousse (6).

13. Procédé selon l'une quelconque des revendications précédentes, comprenant en outre le fait de découper de manière simultanée ou dans des positions échelonnées lesdits deux panneaux (2) ou plus en aval dudit poste de transformation en mousse (6) de façon à obtenir directement des groupes de panneaux qui sont disposés les uns le long des autres, en parallèle et arrangés à la verticale, déjà préparés pour un traitement de refroidissement.

14. Appareil pour la transformation en mousse de manière simultanée et en continu de deux panneaux (2) ou plus, chaque panneau étant muni d'une paire de couches externes (3) de matière en bande entre lesquelles est intercalée une couche intermédiaire (4) d'une matière phénolique ou de polyuréthane expansé, comprenant :
- un poste de transformation en mousse (6) ;
- des moyens d'alimentation pour alimenter, dans ledit poste de transformation en mousse (6) et dans une direction de progression horizontale (A), des paires de matières continues en bande (7 ; 7a, 7b, 7c, 7d ; 7e, 7m, 7n ; 7f) disposées les unes le long des autres qui représentent des précurseurs de couches externes (3) de panneaux respectifs, les moyens d'alimentation étant configurés pour disposer à l'intérieur dudit poste de transformation en mousse (6) les deux matières en bandes de chaque paire le long de plans verticaux respectifs (V1, V2, V3, V4) et à l'état espacé l'une de l'autre de façon à définir des surfaces opposées d'un panneau respectif (2) ;
- une paire de dispositifs de transport (5) réciproquement parallèles qui sont disposés sur les côtés dudit poste de transformation en mousse (6) et qui sont mobiles dans ladite direction de progression horizontale (A), chacun desdits dispositifs de transport (5) comprenant une surface latérale de guidage et d'appui (10), disposée sur un plan vertical (V1) qui est appropriée pour recevoir en appui une matière en bande respective la plus externe (7a ; 7d ; 7m ; 7n) ;
- plusieurs buses de distribution distinctes (11) conçues pour distribuer des courants respectifs d'un mélange phénolique ou de polyuréthane pour des paires respectives d'une matière en bande, chaque buse de distribution (11) étant positionnée pour distribuer le courant respectif dans une zone intercalée entre la matière en bande (7) de la paire respective ; et
- un dispositif de retenue inférieur (12) comprenant une surface horizontale d'appui pour supporter et retenir en dessous le mélange phénolique ou de polyuréthane distribué par lesdites plusieurs buses de distribution (11) ;
- des surfaces intermédiaires de guidage et d'appui (13, 14, 15, 29) s'étendant dans ladite direction de progression horizontale (A) et configurées pour s'opposer aux poussées exercées par le mélange phénolique ou de polyuréthane en expansion et les distribuer en direction transversale par rapport à ladite direction de progression horizontale (A).

15. Appareil selon la revendication 14, dans lequel chaque buse de distribution (11) est configurée pour distribuer un courant respectif de mélange phénolique ou de polyuréthane dans une zone (I) intercalée entre les bords horizontaux inférieurs des matières en bandes (7) de la paire respective.

16. Appareil selon la revendication 14, comprenant en outre des moyens en forme de rampes (40) appropriés pour venir s'intercaler, en état de marche, entre les paires de matières en bandes (7 ; 7a, 7b, 7c, 7d ; 7e, 7m, 7n ; 7f ), lesdits moyens en forme de rampes (40) définissant une ou plusieurs surfaces de glissement (41) inclinées vers le bas par rapport à ladite direction de progression (A) et appropriées pour supporter en glissement le mélange afin d'humidifier la surface latérale et de permettre une expansion symétrique dudit mélange vers le haut et vers le bas, des moyens de déroulement-alimentation étant en outre prévus pour le déroulement à partir de rouleaux respectifs (43) et l'alimentation de manière progressive de bandes de retenue (42) en matière flexible le long desdits moyens en forme de rampes (40), et des moyens de pliage pour plier les bords longitudinaux de chaque bande de retenue (42) vers le haut et imprimer à chaque bande de retenue (42) une section transversale en forme de « U » appropriée pour retenir en dessous le mélange phénolique ou de polyuréthane.

17. Appareil selon l'une quelconque des revendications 14 à 16, comprenant en outre une surface de retenue supérieure pour retenir au-dessus le mélange phénolique ou de polyuréthane en expansion ascendante, des moyens de déroulement-alimentation supérieurs étant en outre prévus, qui sont conçus pour un déroulement à partir de rouleaux respectifs et une alimentation de rubans parallèles supplémentaires de retenue de matière en bande appropriés pour empêcher le contact de ladite surface de retenue supérieure avec la mousse, des moyens de pliage supérieurs étant en outre prévus qui sont conçus pour plier lesdits rubans de retenue parallèles supplémentaires de matière en bande pour obtenir une section transversale flexible dont les bords sont pliés en une configuration en « U » pour la retenue supérieure du mélange phénolique ou de polyuréthane.

18. Appareil selon l'une quelconque des revendications 12 à 17, dans lequel lesdits dispositifs de transport (5) comprennent des éléments de transport en forme de courroies ou des éléments en forme de plaques plates enchaînées (8), enroulés autour de rouleaux d'entraînement ou de roues dentées (9) rotatifs autour d'axes de rotation verticaux (B).

19. Appareil selon l'une quelconque des revendications 14 à 18, dans lequel lesdites surfaces intermédiaires de guidage et d'appui sont définies par des moyens en forme de parois de séparation verticales (13, 15) qui sont mobiles dans ladite direction de progression horizontale (A) et configurés pour recevoir en appui les matières en bandes adjacentes de paires contiguës de matières en bandes et s'opposer aux poussées exercées par le mélange phénolique ou de polyuréthane en expansion en direction transversale par rapport à ladite direction de progression (A), lesdits moyens en forme de parois de séparation verticales (13) entrant en contact, lorsqu'ils progressent le long dudit poste de transformation en mousse (6), par-dessous avec des moyens de guidage rainurés respectifs (17,18).

20. Appareil selon la revendication 19, dans lequel lesdits moyens en forme de parois de séparation verticales (13) comprennent une ou plusieurs unités d'éléments en forme de chicanes (28) appropriées pour venir s'intercaler entre des paires de feuilles métalliques ondulées adjacentes, chaque unité comprenant des éléments en forme de chicanes distribués sur un plan vertical et possédant des paires de surfaces intermédiaires de guidage et d'appui (29) appropriées pour recevoir d'un côté une feuille métallique ondulée (7f), et du côté opposé une autre feuille métallique ondulée (7f) d'une paire contiguë.

21. Appareil selon la revendication 19, dans lequel lesdits moyens en forme de parois de séparation verticales (13) comprennent plusieurs éléments de séparation (15) qui sont supportés et entraînés par un dispositif de support et de déplacement (16).

22. Appareil selon la revendication 21, dans lequel lesdits éléments de séparation comprennent des éléments adjacents (15) en forme de bâtons ou en forme de plaques qui possèdent une configuration plate et qui font saillie sur des plans verticaux.

23. Appareil selon la revendication 22, dans lequel lesdits éléments de séparation comprennent des éléments adjacents (15) en forme de plaques possédant une section transversale façonnée qui est appropriée pour l'accouplement à une feuille métallique ondulée ou à une autre matière ondulée ou qui est appropriée pour l'impression, sur une matière en bande telle que du papier ou un film en matière plastique, d'un profil ondulé.

24. Appareil selon l'une quelconque des revendications 21 à 23, dans lequel ledit dispositif de support et de déplacement (16) comprend un dispositif en forme de chaîne ou en forme de courroie sur lequel sont montés lesdits éléments de séparation (15), ledit dispositif en forme de chaîne ou de courroie étant mobile dans une trajectoire en boucle fermée disposée sur un plan vertical.

25. Appareil selon l'une quelconque des revendications 21 à 24, dans lequel ledit dispositif de support et de déplacement (16) comprend des premiers moyens (20) en forme de pistes horizontales qui s'étendent depuis une première extrémité (22) jusqu'à une seconde extrémité (23) dudit poste de transformation en mousse (6), le long desquels lesdits éléments de séparation (15) s'avancent à travers ledit poste de transformation en mousse (6), des seconds moyens (21) en forme de pistes, disposés au-dessus desdits premiers moyens (20) en forme de pistes, à l'extérieur dudit poste de transformation en mousse (6), seconds moyens (21) en forme de pistes le long desquels lesdits éléments de séparation (15) sont mobiles pour retourner depuis ladite seconde extrémité (23) jusqu'à ladite première extrémité (22), un premier groupe de poussée (24) pour pousser lesdits éléments de séparation (15) le long desdits premiers moyens (20) en forme de pistes depuis la première (22) jusqu'à la seconde extrémité (23), une première unité de transfert (25), à ladite seconde extrémité (23), pour retirer, un à la fois, à partir desdits premiers moyens horizontaux (20) en forme de pistes les éléments de séparation (15) qui quittent ledit poste de transformation en mousse (6), de façon à soulever et à transférer les éléments de séparation (15) auxdits seconds moyens (21) en forme de pistes, un second groupe de poussée (26) pour pousser lesdits éléments de séparation (15) le long desdits seconds moyens (21) en forme de pistes, et une seconde unité de transfert (27), à ladite première extrémité (22), pour retirer, un à la fois, à partir desdits seconds moyens (21) en forme de pistes, les éléments de séparation (15) pour abaisser et positionner les éléments de séparation (15) sur lesdits premiers moyens horizontaux (20) en forme de pistes qui pénètrent dans ledit poste de transformation en mousse (6).

26. Appareil selon l'une quelconque des revendications 14 à 25, dans lequel un desdits dispositifs de transport (5) ou les deux dispositifs de transport (5) comprennent des surfaces respectives de guidage et d'appui (30) possédant des sections transversales qui sont configurées avec un profil ondulé approprié pour s'accoupler et s'apparier à une feuille métallique ondulée ou à une autre matière ondulée ou pour imprimer, sur une matière en bande flexible telle que du papier ou un film en matière plastique, un profil transversal ondulé.

27. Appareil selon une ou plusieurs des revendications 14 à 26, dans lequel, sur lesdites surfaces intermédiaires de guidage et d'appui (14, 29) et sur les parois desdits dispositifs de transport (5) on obtient à l'état distribué, des ouvertures d'aspiration d'air qui sont reliées à un moyen faisant office de ventilateur ou à un moyen faisant office de pompe configurés pour générer une dépression ou un certain degré de vide afin de maintenir les paires de matières continues en bandes (7 ; 7a, 7b, 7c, 7d ; 7e, 7m, 7n, 7f) à l'état adhéré aux plans verticaux respectifs.

28. Appareil selon l'une quelconque des revendications de 19 à 27, comprenant en outre un four pour le préchauffage desdits moyens en forme de parois de séparation verticales (13, 15) et/ou lesdits dispositifs de transport latéraux (5), ledit four étant situé le long d'un chemin de retour desdits moyens en forme de parois de séparation verticales (13, 15) en direction de l'entrée dans ledit poste de transformation en mousse (6).
